# EUROPEAN PATENT APPLICATION

(11) **EP 4 530 054 A1**
(43) Date of publication of application: **02.04.2025**
(21) Application number: 23306616.6
(22) Date of filing: 27.09.2023
(51) Int. Cl.: B29D 11/00

(54) **OPTICAL ARTICLE COMPRISING A SUBSTRATE FOR MYOPIA CONTROL WITH EMBEDDED NANOPARTICLES**

(71) Applicant: Essilor International, 94220 Charenton-Le-Pont (FR)
(72) Inventor: FROMENTIN, Pierre, 10240 Bangkok (TH); KONGTARA, Nisachon, 10160 Bangkok (TH)
(74) Representative: Jacobacci Coralis Harle

(57) **Abstract**

The invention relates to an optical article having a substrate made of an optical material comprising a polymer matrix, the substrate comprising a bulk part, and an external part, and said external part of the substrate is made of said optical material comprising said polymer matrix, and particles functionalized with a coupling agent embedded into said polymer matrix of the external part of the substrate, said bulk part of the substrate is made of said optical material comprising said polymer matrix, and said particles are not embedded into the bulk part of the substrate, and the haze value of a 2 mm-thick substrate as determined according to the standard ASTM D1003-00 is higher than or equal to 4 %.

## Description

The present invention relates to optical articles comprising a substrate made of a polymer material, having a certain level of light diffusion in the visible range, and more particularly to ophthalmic lenses. The present invention is also directed to methods of making these optical articles and their use for preventing eye-length related disorders.

It is a common practice in the art to coat at least one main surface of an optical article substrate, such as an ophthalmic lens, with several coatings for imparting to the finished article additional or improved optical or mechanical properties. These coatings are designated in general as functional coatings.

Thus, it is usual practice to coat at least one main surface of a substrate, typically made of an organic glass material, with an impact-resistant coating (impact resistant primer), an abrasion- and/or scratch-resistant coating (hard coat), an antireflection coating, an anti-fouling topcoat, a polarized, and/or a photochromic or dyeing coating.

Numerous processes and methods have been proposed for obtaining functionalized optical articles.

Generally, the optical article is formed in a mold in a first step, the molded product is removed, and the desired function is incorporated by forming or transferring a coating on the surface of the molded optical article, which methods comprise wet coating method, vacuum deposition method, lamination, etc. A coating can also be applied through the in-mold coating technique (IMC), in which a coating composition is injected onto the surface of a substrate while it is still in the mold. The coating then solidifies and adheres to the substrate. Another technique disclosed, e.g., in US 2009/0011122 involves forming a coating on the mold surface prior to casting/injection of the substrate material. The substrate is then cured and adheres to the coating.

However, the use of a surface coating process to make a functionalized surface can involve multiple additional manufacturing steps, including surface pretreatment, additional primer layers, and suffers from complex application and curing steps, thermal expansion incompatibility, peeling, and various other disadvantages.

The coating layer must sufficiently adhere or bind to the underlying substrate so as to avoid detachment from the substrate, which is especially challenging for polymer substrates. Proper execution of coating-based techniques may require significant research and development commitments, and modifying the surface properties of a substrate material with antireflection coatings has a significant impact on the product cost.

WO 2019/030263 provides a solution to the coating issues and discloses an optical article having a substrate made of an optical material comprising a polymer matrix, wherein the substrate comprises an external layer in which particles functionalized with a silane coupling agent are embedded into the polymer matrix, the refractive index of the particles Rₚ being lower than the refractive index of the polymer matrix Rₛ. The external layer of embedded particles improves the light transmission properties of the substrate. The optical article is prepared by application of a thin colloid layer of mineral particles on the inner face of a mold, followed by evaporation, mold assembly, monomer filing, polymerization and disassembly to get lenses with mineral particles at the surface and sub-surface.

WO 2019/030264 discloses a similar technology for improving the abrasion resistance of an optical article's substrate, the Bayer value of said substrate determined in accordance with the ASTM F735-81 standard being at least 30 % greater than the Bayer value of the same substrate with no embedded particles.

WO 2010/022353 discloses a method for incorporating additives at the surface of polymer articles, comprising applying, to at least a portion of a molding form, a fluid comprising particles with a size in the range of from about 0.1 nm to about 100 µm, and molding a working composition using the treated molding form so as to obtain particles being at least partially or securely embedded in the working composition.

Several lenses have been commercialized to prevent myopia progression in children based on adding microlenses to the surface of a lens such as Stellest^{™} from Essilor or Miyosmart^{™} from Hoya. Other spectacle lenses incorporate Diffusion Optics Technology^{™} (DOT), whereby thousands of small elements across the lens, shaped as dots, scatter light onto the retina. A small (around 5 mm) central section of the lens does not incorporate these dots, providing clear vision and facilitating lens power verification.

Especially, dots can be made by laser engraving the concave surface of a hard coated lens, which equipment is not suitable to mass production. Typically, the engraved dots that create a certain level of haze are around 200 µm in diameter, < 10 µm deep and the spacing between the dots is around 360 µm. These markings on the lens stay exposed and tend to attract and retain contaminants. They can also be damaged during the wear of the lens or upon cleaning.

In view of the foregoing issues, there is a need for an optical article comprising a means capable of providing a light-scattering functionality without the need to use laser engraving technology to introduce light-diffusing centers, or a surface coating technology.

Also, there is a need to provide an optical article with light scattering properties being an alternative to dots or patterns, with uniform (or homogeneous) light scattering properties over part of the optical article, over the main part of the optical article or over the whole part of the optical article.

The process for manufacturing such an article should be simple, easy to implement and reproducible. Another objective is to enhance productivity by shortening the preparation time of the optical article, without impairing the polymerization of the optical material composition and mechanical properties of the final optical material.

The inventors have found that it was possible to modify the substrate of an optical article by embedding specific particles into its surface, preferably nanoparticles, to generate a controlled light scattering surface capable of preventing eye-length-related disorders, such as myopia. The technical solution involves the introduction of diffusive (light-scattering) particulate optical elements at the sub-surface of the polymer substrate, while preserving visual acuity and aesthetics, and allowing the mass production of these optical articles.

To address the needs of the present invention and to remedy to the mentioned drawbacks of the prior art, the applicant provides an optical article having a substrate made of an optical material comprising a polymer matrix, the substrate comprising a bulk part, and an external part in which particles functionalized with a coupling agent are embedded, and
said external part of the substrate is made of said optical material comprising said polymer matrix, and particles functionalized with a coupling agent embedded into said polymer matrix of the external part of the substrate,
said bulk part of the substrate is made of said optical material comprising said polymer matrix, and said particles are not embedded into the bulk part of the substrate,
wherein the haze value of a 2 mm-thick substrate as determined according to the standard ASTM D1003-00 is higher than or equal to 4 %, preferably higher than or equal to 8 %.

The invention also provides a process for introducing a diffusive layer within the optical article, directly at the substrate manufacturing step, and further relates to the use of the above optical article to prevent an eye-length growth related disorder, preferably the advancement of myopia.

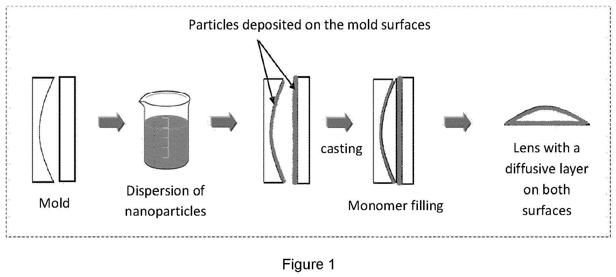

The foregoing and other objects, features and advantages of the present invention will become readily apparent to those skilled in the art from a reading of the detailed description hereafter when considered in conjunction with the accompanying drawing, wherein figure 1 depicts the main steps of a molding process embodiment for preparing an optical article according to the invention.

### Detailed description of the invention

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

The optical article according to the invention is preferably an optical lens or lens blank, more preferably an ophthalmic lens or lens blank. The optical article comprises a substrate and optional coatings or layers. Coatings or layers are not constituents of the substrate.

The term "ophthalmic lens" is used to mean a lens adapted to a spectacle frame to protect the eye and/or correct the sight. Said lens can be chosen from afocal, unifocal, bifocal, trifocal, progressive, plano, solar and Fresnel lenses.

A substrate, in the sense of the present invention, should be understood to mean an uncoated substrate, typically an organic glass substrate, and said substrate may act as a support for a stack of one or more coatings or layers.

The substrate generally has two main faces and may in particular be an optically transparent material having the shape of an optical article, for example an ophthalmic lens destined to be mounted in an eyeglasses frame. In this context, the term "substrate" is understood to mean the base constituent material of the optical article and more particularly of the optical lens.

A substrate is an object that is well-identifiable and well-known to those of ordinary skill in the art. A substrate is not a coating nor a layer. In particular, the substrate is not any one of the following coatings: an interferential coating, an antireflection coating, a reflective coating, a primer coating, a hard coat (abrasion- and/or scratch-resistant coating), an antifouling coating.

The optical article according to the invention comprises a substrate constituent made of an optical material comprising a polymer matrix, and said substrate, which is an uncoated constituent, comprises an external part with particles embedded therein. Therefore, the external part of the substrate of the present invention is not a coating.

The optical substrate of the present invention may be modified by embedded particles on at least one of its main surfaces, for example on its front main surface, rear main surface, or both main surfaces. At least one portion of the surface of the substrate is modified by particles, for example a predetermined area, but not necessarily a whole main surface of the substrate. This means that some areas of the surface of the substrate can be left uncovered by embedded particles. It can be a central zone of the substrate.

In one embodiment, at least one main surface of the substrate is homogeneously modified in its entirety by the embedded particles.

In one embodiment, particles functionalized with a coupling agent are embedded in a manner defining a plurality of discontinuous zones at the surface of the substrate. In an embodiment, the surface of the substrate is homogeneously covered within said zones.

As used herein, the rear face of the substrate is intended to mean the face which, when using the article, is the nearest to the wearer's eye. It is generally a concave face. On the contrary, the front face of the substrate is the face which, when using the article, is the most distant from the wearer's eye. It is generally a convex face.

The substrate material can be made from a thermoplastic or thermosetting resin, generally chosen from transparent materials of ophthalmic grade used in the ophthalmic industry.

Thermoplastic materials may be selected from, for instance polyamides, polyimides, polysulfones, polycarbonates, polyurethanes, polystyrenes, poly(ethylene terephthalate), polymethylmethacrylate (PMMA) and copolymers thereof. Preferred thermoplastic materials are polycarbonates.

The preferred class of polymer matrices (also referred to as "substrate material" in the present disclosure) comprises thermosetting (crosslinked) resins which may be selected from, for instance: (meth)acrylic or thio(meth)acrylic polymers and copolymers, in particular halogenated ones, or polyethoxylated aromatic (meth)acrylates, such as those derived from bisphenol-A, urethane and thiourethane polymers and copolymers, resulting from the polymerization of at least one polyisocyanate and at least one polyol or polythiol (marketed, for instance, under the trade name Trivex^{®} by the PPG Industries company), epoxy polymers and copolymers (polyepoxides), episulfide polymers and copolymers, such as those resulting from the polymerization of least one polyepisulfide and at least one polythiol, resins resulting from polymerization or (co)polymerization of alkylene glycol bis allyl carbonates such as polymers and copolymers of diethylene glycol bis(allylcarbonate) (marketed, for instance, under the trade name CR-39^{®} by the PPG Industries company, the corresponding marketed lenses being referred to as ORMA^{®} lenses from ESSILOR). The preferred thermoset substrate materials are made of resins resulting from polymerization or (co)polymerization of alkylene glycol bis allyl carbonates such as polymers and copolymers of diethylene glycol bis(allylcarbonate), or polyurethane, or polythiourethane resins, such as those having a refractive index of 1.60 or 1.67, or polyepisulfide resins, such as those having a refractive index of 1.74.

Specific examples of polymer matrices suitable to the present invention are those obtained from thermosetting polythiourethane resins, which are marketed by the Mitsui Toatsu Chemicals company as MR series, in particular MR6^{®}, MR7^{®}, MR8^{®} and MR10^{®} resins. These materials as well as the monomers used for their preparation are especially described in the patents US 4,689,387, US 4,775,733, US 5,059,673, US 5,087,758 and US 5,191,055.

The polymer matrix of the substrate has preferably a refractive index Rₛ higher than or equal to 1.48; preferably higher than or equal to 1.5, more preferably higher than or equal to 1.55, and even better higher than or equal to 1.6.

The substrate of the optical article comprises a bulk part, and an external part in which particles, having a refractive index Rₚ preferably higher than the refractive index of the polymer matrix Rₛ, functionalized with a coupling agent, are embedded. Said particles provide the optical diffusion properties such as haze that help to softly scatter light, diminish contrast on the retina, and induce defocus, preferably peripheral defocus of light entering the eye, thus preventing abnormal eye growth.

As used herein, the refractive index of a particle is intended to mean the refractive index of the particle itself, not functionalized with a coupling agent.

The embedded particles can be particles of the same nature or can be a mixture of two or more different particles having different refractive indexes, or composite particles, for example core-shell particles, typically core-shell particles of different oxides. When a mixture of particles is used, the "refractive index of the particles Rₚ" as used herein corresponds to the average refractive index of the mixture of particles. In other words, the average refractive index of the particles Rₚ embedded in the external part of the substrate is considered and is preferably higher than the refractive index of the polymer matrix Rₛ.

When it is desired to have an average refractive index of the particles Rₚ higher than the refractive index of the polymer matrix Rₛ, the external part of the substrate can comprise particles having a refractive index Rₚ lower than or equal to the refractive index of the polymer matrix Rₛ provided that they are mixed with a sufficient quantity of particles having a refractive index Rₚ higher than the refractive index of the polymer matrix Rₛ.

Particles according to the invention, i.e., particles having preferably a refractive index Rₚ is higher than the refractive index of the polymer matrix Rₛ, are only embedded in the external part of the substrate, and not in the bulk of the substrate. In one embodiment, no particle is embedded in the bulk of the substrate.

The bulk part of the substrate is made of said optical material comprising said polymer matrix. The external part of the substrate is made of the same optical material comprising the same polymer matrix as the bulk part of the substrate, but additionally comprises embedded particles according to the invention. Said particles functionalized with a coupling agent having preferably a refractive index Rₚ > Rₛ are embedded into said polymer matrix of the external part of the substrate.

The external part of the substrate in which the particles are embedded generally preferably has a thickness that is substantially uniform, and preferably lower than or equal to 1 µm, more preferably lower than or equal to 800, 600, 500 or 400 nm. Its thickness preferably ranges from 200 nm to 900 nm, more preferably from 300 nm to 800 nm, even more preferably from 400 nm to 600 nm. The thickness of the external part of the substrate in which the particles are embedded generally represents less than 0.05 % % of the thickness of the substrate, and preferably represents from 0.01 % to 0.04 % of the thickness of the substrate.

By "embedded", it is meant that particles are either totally surrounded by the substrate or partially surrounded by substrate. In the latter case, particles are still strongly mechanically bound to the substrate, though adjacent to the surface. The degree of embedding will depend on the process and surface topography of the mold. Pressure and/or temperature may optionally be adjusted to control the degree of embedding.

In some aspects of the invention, the particles have a refractive index Rₚ higher than or equal to 1.8, preferably higher than or equal to 1.85, 1.90, 1.95, 2.0 or 2.1.

In one embodiment of the invention, the refractive index of the particles Rₚ and the refractive index of the polymer matrix Rₛ are such that Rₚ - Rₛ > 0.1. Preferably Rₚ - Rₛ is higher than any one of the following values: 0.15, 0.2, 0.3, 0.4, 0.5, 0.6, 0.7, 0.8, 0.9, 1.0.

In one embodiment of the invention, the refractive index of the particles Rₚ and the refractive index of the polymer matrix Rₛ are such that |Rₚ - Rₛ| > 0.1 (difference expressed in absolute value). Preferably |Rₚ - Rₛ| is higher than any one of the following values: 0.15, 0.2, 0.3, 0.4, 0.5, 0.6, 0.7, 0.8, 0.9, 1.0 (difference expressed in absolute value).

The particles used in the present invention are diffusive particles. Indeed, the substrate having embedded particles according to the invention in an external "layer" exhibits light diffusion properties, which increase as the refractive index difference between the substrate matrix and the modifying particles increases, while a substrate having embedded particles with a low refractive index difference as compared to the polymer matrix in an external part does not exhibit light diffusion properties. Therefore, it is preferable to use particles having a very high or very low refractive index if higher haziness the optical article is desired.

While particles having a refractive index higher or lower than the refractive index of the polymer matrix can be used, better results in terms of haziness are obtained when particles having a refractive index higher than the refractive index of the polymer matrix are employed.

The particles are generally inorganic particles, and preferably metal oxide or metal hydroxide. Metal fluoride particles can also be used as well as diamond particles.

Non-limiting examples of particles that may be used include particles of aluminum oxide, zirconium oxide (ZrO₂), indium-doped tin oxide (ITO), antimony-doped tin oxide (ATO), aluminum-doped zinc oxide, tin oxide (SnO₂), zinc oxide (ZnO), indium oxide (In₂O₃), titanium oxide such as titanium dioxide (TiO₂), Sb₂O₃, Sb₂O₅, Y₂O₃, Ta₂O₅, La₂O₃, Fe₂O₃, WO₃, CeF₃, praseodymium oxide (Pr₂O₃), praseodymium titanate (PrTiO₃), Nb₂O₅,neodymium oxide (Nd₂O₅), vanadium pentoxide, cerium oxide, zinc antimonide or indium antimonide (described in the patent US 6,211,274 as well as a method of preparation). The preferred particles are TiO₂, SnO₂, ZrO₂, Sb₂O₅ particles, and mixtures thereof.

Depending on the refractive index of the polymer matrix of the substrate, especially if said refractive index is high, low refractive index particles such as silica or hollow silica particles can be used.

The particles may also be composite particles based on two or more metal oxides, fluorides or hydroxides, or at least one of such materials and at least one polymer (e.g., hybrid particles having a core/shell structure, or Janus particles). Composites such as SiO₂/TiO₂, SiO₂/ZrO₂, SiO₂/TiO₂/ZrO₂, or TiO₂/SiO₂/ZrO₂/SnO₂, or reactive core-shell particles having at least one metal oxide, fluoride or hydroxide as the core and a polymerizable material as the shell, such as a pre-polymer, may be employed. The reactive groups of the latter particles may react with each other under thermal or UV treatment or further crosslink with reactive material of the substrate matrix, such as polymerizable compounds, during the preparation of the optical article, providing a dense network and thus a harder substrate surface.

The preferred particles are nanoparticles, i.e., particles having a diameter of the nanometer order (< 1 µm and ≥ 1 nm). Preferred particle diameter is less than 150 nm, more preferably less than 100 nm, and preferably ranges from 2 to 100 nm, from 10 to 95 nm and from 15 to 90 nm, more preferably from 20 to 90 nm, better from 20 to 80 nm. Microparticles having a diameter of the micrometer order (< 1 mm but ≥ 1 µm) can also be used.

The size of the particles in a liquid is determined by conventional methods such as light scattering, and particles size analyzer. The size of the particles in a solid is determined by tunneling electron microscope or light scattering.

The particles may include a homogeneous or heterogeneous population of particles, and may include particles of different sizes, different natures, or both. In this way, the user may embed multiple kinds of particles with multiple kinds of functionalities to deliver various properties in accordance with the final use of the product.

In some embodiments, the distribution of the homogeneous or heterogeneous population of particles is not the same on the surface of the substrate, leading to the possibility of having a gradient of particles.

In some embodiments, particles may be made of a mixture of small sized-particles, for example having a diameter of from 10 to 15 nm and of larger sized-particles, for example having a diameter of from 30 to 80 nm. Bigger particles tend to slightly decrease transmission and increase haze of the optical article due to light scattering.

According to the invention, the particles are functionalized with at least one coupling agent, thus obtaining reactive particles. This may help to promote adhesion of the particles to the polymer matrix by developing interactions, preferably covalent bonds, thus avoiding loss of particles from the surface of the substrate. By this way, functionalized particles may improve the surface cohesion and mechanical properties of the substrate. The presence of a coupling agent also allows to obtain an abrasion resistance that is higher than that of the polymer matrix.

Coupling agents are compounds containing functional groups that react or bond with both organic and inorganic materials, here inorganic particles and organic monomers. A coupling agent will act at an interface between an organic polymer matrix and an inorganic particle, to bond, or couple, the two dissimilar or incompatible materials.

The (colloidal) particles are preferably modified with a silane coupling agent, containing a reactive organic group connected to the silicon atom through a carbon atom, such as an epoxysilane, an aminosilane, a mercaptosilane, an unsaturated silane or a mixture thereof, more preferably with an epoxyalkoxysilane, an amino alkoxysilane, an unsaturated alkoxysilane or a mixture thereof. These reactive groups may react with each other or further crosslink with reactive groups of the substrate matrix, such as polymerizable compounds, during the preparation of the optical article, providing a dense network and thus a harder substrate surface.

In one embodiment, the coupling agent is a silane coupling agent selected from vinylsilanes, (meth)acrylic silanes, allylsilanes, mercaptoalkylsilanes, aminoalkylsilanes, and glycidoxyalkylsilanes.

Examples of epoxyalkoxysilanes able to react both with particles surface and polymer matrix are γ-glycidoxypropyl-trimethoxysilane (glymo), γ-glycidoxypropyl-pentamethyldisiloxane, γ-glycidoxypropyl-methyl-diisopropenoxysilane, γ-glycidoxypropyl-methyl-diethoxysilane, γ-glycidoxypropyl-dimethyl-ethoxysilane, γ-glycidoxypropyl-diisopropyl-ethoxysilane and γ-glycidoxypropyl-bis (trimethylsiloxy) methylsilane. Further examples of useful epoxyalkoxysilanes can be found in WO 2012/062790, in the name of the applicant. The preferred epoxyalkoxysilane is glymo.

Unsaturated silanes are silanes containing an unsaturated group connected to the silicon atom through a carbon atom, including vinylsilanes, allylsilanes, acrylic silanes and methacrylic silanes. Unsaturated silanes preferably comprise a terminal ethylenic double bond.

Examples of vinylsilanes are vinyltris(2-methoxyethoxy)silane, vinyltrisisobutoxysilane, vinyltri-t-butoxysilane, vinyltriphenoxysilane, vinyltrimethoxysilane, vinyltriisopropoxysilane, vinyltriethoxysilane, vinyltriacetoxysilane, vinylmethyldiethoxysilane, vinyl propyltrimethoxysilane, vinylmethyldiacetoxy-silane, vinylbis(trimethylsiloxy)silane and vinyldimethoxyethoxysilane.

Examples of allylsilanes are allyltrimethoxysilane, allyltriethoxysilane, allylpropyltrimethoxysilane and allyltris (trimethylsiloxy)silane.

Examples of acrylic silanes are 3-acryloxypropyltris (trimethylsiloxy) silane, 3-acryloxy-propyl-trimethoxysilane, acryloxy-propylmethyl-dimethoxy-silane, 3-acryloxypropyl-methylbis (trimethylsiloxy) silane, 3-acryloxypropyl-dimethylmethoxysilane, N-(3-acryloxy-2-hydroxypropyl)-3-aminopropyl-triethoxysilane.

Examples of methacrylic silanes are 3-methacryloxypropyltris (vinyldimethoxylsiloxy) silane, 3-methacryloxypropyltris (trimethylsiloxy) silane, 3-methacryloxypropyltris (methoxyethoxy) silane, 3-methacryloxy-propyl-trimethoxysilane, 3-methacryloxypropyl-pentamethyl-disiloxane, 3-meth-acryloxy-propyl-methyldimethoxysilane, 3-methacryloxy-propylmethyl-diethoxy-silane, 3-methacryloxypropyl-dimethyl-methoxysilane, 3-methacryloxy-propyl-dimethylethoxysilane, 3-methacryloxy-propenyl-trimethoxy-silane and 3-methacryloxy-propylbis (trimethylsiloxy) methylsilane.

Aminosilanes coupling agents are organosilanes comprising at least one amine group connected to the silicon atom through a carbon atom, preferably NH or NH₂, which is preferably capable of interacting with the particles. Said aminosilane may also comprise other functional groups.

The aminosilane is preferably an alkoxysilane bearing at least one amine group, more preferably a trialkoxysilane bearing at least one amine group. Non limiting examples of aminosilanes are primary aminoalkyl silanes, secondary aminoalkyl silanes and bis-silylalkyl amines, in particular 3-aminopropyltrimethoxysilane, 3-aminopropyltriethoxysilane, N-β-(aminoethyl)-γ-aminopropyltrimethoxysilane (H₂NCH₂CH₂NHCH₂CH₂CH₂Si(OCH₃)₃), bis-trimethoxysilylpropylamine, and the triaminofunctional compound of formula H₂NCH₂CH₂NHCH₂CH₂NHCH₂CH₂CH₂Si(OCH₃)₃, which are all commercially available. Obviously, analogues of these silanes, such as ethoxy analogues, can also be used.

Mercaptosilanes coupling agents are organosilanes comprising at least one mercapto (SH) group connected to the silicon atom through a carbon atom, which is preferably capable of interacting with the particles. Said mercaptosilane may also comprise other functional groups.

The mercaptosilane is preferably an alkoxysilane bearing at least one mercapto group, more preferably a trialkoxysilane bearing at least one mercapto group, better a mercaptoalkyl trialkoxysilane. Suitable mercaptosilanes are mentioned in US 2009/226738. Particularly preferred mercaptosilanes are 3-mercaptopropyltrimethoxysilane and 3-mercaptopropyltriethoxysilane.

The coupling agent can also include one or more zirconate coupling agents, one or more titanate coupling agents, or any combination thereof.

The preferred coupling agents are vinyltrimethoxysilane, 3-mercaptopropyl trimethoxysilane, 3-glycidyloxypropyl trimethoxysilane, 3-methacryloxypropyltrimethoxysilane, 3-acryloxypropyltrimethoxysilane. Among coupling agents, methacrylic silanes and acrylic silanes such as 3-acryloxypropyltrimethoxysilane and 3-methacryloxypropyltrimethoxysilane are preferred, since they allow a superior uniformity of the diffusive particle layer at the surface of the substrate.

The weight ratio of particles / coupling agent preferably ranges from 5 to 25, more preferably from 6 to 20. Said weight ratio of particles / coupling agent is preferably higher than or equal to 2, 3, 5, 6, 8 or 10.

Particles may also suitably include one or more functional agents. Such additives are useful in conferring additional, useful properties to the particles. In embodiments of the invention, the additive is contained in the particles or grafted to the particles, and is preferably a light-absorbing additive or any other functional compound. The light-absorbing additive may be chosen, without limitation, from a dye, a photochromic compound (to produce an article that exhibits a color change when exposed to particular radiation), an infrared absorber and a UV absorber. Thus, the particles may be modified by grafting an organic group or a molecule, especially by grafting onto a silicon atom.

The polymer matrix of the present optical article can be obtained from methods that are well known to those of ordinary skill in the art, typically from an optical material composition (substrate composition or molding composition), which can be an optical material resin or a polymerizable composition.

The optical material composition that can contain additives commonly used in the art, for example internal mold release agents (described e.g. in US 2014/252282), resin modifiers, light stabilizers, UV absorbers, near infrared absorbers, polymerization catalysts/initiators, color balancing agents, chain extenders, crosslinking agents, free radical scavengers such as antioxidants and hindered amine light stabilizers, dyes, pigments, fillers, surfactants such as cetyltrimethylammonium bromide, and adhesion accelerators.

The optical material composition according to the invention generally comprises a system for initiating the polymerization (initiator or catalyst). The polymerization initiating system can comprise one or more thermal or photochemical polymerization initiating agents or alternatively, a mixture of thermal and photochemical polymerization initiating agents, depending on the nature of the polymerizable compounds. Generally, the initiating agents are used in a proportion of 0.01 to 5 % by weight with respect to the total weight of polymerizable compounds present in the composition.

In particular, for substrates resulting from polymerization or (co)polymerization of polyurethane and polythiourethane resins, preferred catalysts are selected from alkyltins, alkyltin oxides, metal coordination complexes or amines, more preferably alkyltins. A preferred proportion for alkyltins is 0.02 to 2 % by weight with respect to the total weight of polymerizable compounds present in the composition. Preferred alkyltins are dibutyltin dichloride and dimethyltin dichloride.

Free radical initiators that are typically recommended for use with polyol (allyl carbonate) monomers, such as diethylene glycol bis(allyl carbonate), are diisopropyl peroxydicarbonate (IPP), benzoyl peroxide (BPO), di-sec-butyl peroxydicarbonate (Arkema Lup225), bis(tert-butylcyclohexyl) peroxydicarbonate (Akzo Perkadox 16) and monoperoxycarbonate initiators, such as tert-butylperoxy isopropyl carbonate.

According to the invention, the optical material can comprise at least one absorbing dye that at least partially inhibits transmission of light in the 400 nm to 500 nm wavelength range, i.e., the blue wavelength range, more preferably the 415-455 nm range or the 420-450 nm range. Blue light cutting dyes are extensively described in WO 2017/077358, in the name of the applicant.

In one embodiment of the invention, the optical material further comprises at least one UV absorber in order to reduce or prevent UV light from reaching the retina (in particular in ophthalmic lens materials), but also to protect the substrate material itself, thus preventing it from weathering and becoming brittle and/or yellow. Said UV absorber also limits or even eliminates photodegradation of dyes and absorbers contained in the substrate. It can also be incorporated into a coating present at the surface of the optical article.

The UV spectrum has many bands, especially UVA, UVB and UVC bands. Amongst those UV bands reaching the earth surface, UVA band, ranging from 315 nm to 380 nm, and UVB band, ranging from 280 nm to 315 nm, are particularly harmful to the retina.

The UV absorber that may be used in the present invention preferably has the ability to at least partially block light having a wavelength shorter than 400 nm, preferably UV wavelengths below 385 or 390 nm.

Most preferred ultraviolet absorbers have a maximum absorption peak in a range from 350 nm to 370 nm and/or do not absorb light in the 465-495 nm range, preferably the 450-550 nm range. In one embodiment, the UV absorber does not absorb any substantial amount of visible light.

In a preferred embodiment, the UV absorber has the ability to at least partially cut blue light, and thus presents an absorption spectrum extending to a selected wavelength range within the visible blue light range of the electromagnetic spectrum (400-500 nm region), in particular the wavelength band with an increased dangerousness, i.e., the 415-455 nm range, preferably the 420-450 nm range.

Suitable UV absorbers include without limitation substituted benzophenones such as 2-hydroxybenzophenone, substituted 2-hydroxybenzophenones disclosed in U.S. Pat. No. 4,304,895, 2-hydroxy-4-octyloxybenzophenone (Seesorb 102^{®}) 2,7-bis(5-methylbenzoxazol-2-yl)-9,9-dipropyl-3-hydroxyfluorene, 1,4-bis(9,9-dipropyl-9H-fluoreno [3,2-d] oxazol-2-yl)-2-hydroxyphenyl, 2-hydroxyphenyl-s-triazines and benzotriazoles compounds.

The UV absorber is preferably a benzotriazole compound. Suitable UV absorbers from this family include without limitation 2-(2-hydroxyphenyl)-benzotriazoles such as 2-(2-hydroxy-3-t-butyl-5-methylphenyl) chlorobenzotriazole, n-octyl-3-[3-tert-butyl-4-hydroxy-5-(5-chloro-2H-benzotriazol-2-yl)phenyl] propionate (Eversorb 109^{®}), 2-(2'-hydroxy-5'-t-octylphenyl) benzotriazole, 2-(3'-methallyl-2'-hydroxy-5'-methyl phenyl) benzotriazole or other allyl hydroxymethylphenyl benzotriazoles, 2-(2-hydroxy-5-methylphenyl)-2H-benzotriazole (Seesorb^{®} 701), 2-(3,5-di-t-amyl-2-hydroxyphenyl) benzotriazole, and the 2-hydroxy-5-acryloxyphenyl-2H-benzotriazoles disclosed in U.S. Pat. No. 4,528,311. Preferred absorbers are of the benzotriazole family. Commercially available products include Tinuvin^{®} and Chimassorb^{®} compounds from BASF such as Tinuvin^{®} 326, Seeseorb^{®} 701 and 703 from Shipro Kasei Kaisha, Viosorb 550^{®} from Kyodo Chemicals, and Kemisorb 73^{®} from Chemipro and TCP Tinuvin Carbo Protect from BASF.

The UV absorbers are preferably used in an amount representing from 0.1 to 5 % of the weight of the optical material, and preferably from 0.2 to 2 %.

In one embodiment, the optical material composition comprises at least one color-balancing component in order to obtain an optical article having a cosmetically acceptable appearance for the wearer/user and when viewed by an external observer, in particular perceived as mostly color neutral. Indeed, blue light blocking means such as dyes or specific UV absorbers that can be present in the polymerizable composition tend to produce a color tint in the optical article as a "side effect", the latter appearing yellow, brown or amber if no color balancing means is employed.

In the present invention, the color balancing agent is preferably a bluing agent, i.e., a compound having an absorption band in the visible light spectrum in the orange to yellow wavelength region and manifesting a color from blue to violet. Color balancing agents are extensively described in WO 2017/077358, in the name of the applicant. More details concerning this embodiment, such as the arrangement of the color-balancing component relative to a system blocking blue light wavelengths, and further exemplary systems including a blue light blocking component and a color-balancing component can be found e.g. in US 8360574, WO 2007/146933, WO 2015/097186, WO 2015/097492.

The color balancing component is generally used in an amount sufficient to adjust the hue of the optical material, typically from 0.01 to 5 % by weight, more preferably from 0.1 to 2 %, relative to the weight of the optical material composition.

The color balancing components, dyes and UV absorbers are generally incorporated into the substrate of the optical article, but can also be incorporated in at least one coating/film applied on the surface of the substrate, such as a primer coating or hard coat.

The scattering efficiency of the optical article, which is linked to its ability to be used, e.g., in myopia reducing optical articles, can be quantified by haze measurement. Conventional haze meters can be used, e.g., a BYK-Gardner haze meter that measures total light transmitted through an optical article, the amount of light transmitted undisturbed, and the amount of light deflected more than 2.5 degrees from the axis of the incident light.

The haze value of a 2 mm-thick substrate according to the invention as determined according to the standard ASTM D1003-00 is higher than or equal to 4 %, preferably higher than or equal to 5 %, 6 % or 8 %, indicating a certain level of cloudiness. In one embodiment, said haze value of the present substrate is higher than or equal to 10, 12, 15, 20, 25 or 30 %. In another embodiment, said haze value of the present substrate ranges from 10 % to 30 %, more preferably from 15 % to 25 %. The above values of haze mentioned for the substrate are also preferably satisfied by the optical article itself. Such haze values can be attained by several means, such as adapting the amount of particles used or managing the refractive index difference between the particles and the polymer matrix.

If the surface of the optical article is not homogeneously modified by particles, the haze value of the substrate according to the invention is an average value of haze measured on the whole surface of the optical article.

The optical article should have a controlled hazy surface to avoid the advancement of myopia. Those skilled in the art will recognize that the level of diffusion of the substrate can be controlled by many parameters, such as the nature, size, aggregation state and shape of the particles, the nature of the coupling agent, the mismatch of the refractive index of the substrate polymer matrix and the particles, the application method of the particles on the substrate or the quantity of particles applied in the external part of the substrate.

Despite the presence of diffusive particles in the external part of the substrate, the substrate maintains a high transmittance in the visible region.

The optical article according to the invention preferably has a relative light transmission factor in the visible spectrum Tv higher than or equal to 70 %, preferably higher than or equal to 75 %, more preferably higher than or equal to 80 %, and better higher than or equal to 85 %, 87 % or 89 %.

The substrate of the optical article according to the invention preferably has a relative light transmission factor in the visible spectrum Tv higher than or equal to 70 %, preferably higher than or equal to 75 %, more preferably higher than or equal to 80 %, and better higher than or equal to 85 %, 87 % or 89 %.

The Tv factor, also called "luminous transmission" of the system, is such as defined in ISO standard 13666:1998 and is measured according to the standard ISO 8980-3. It is defined as the average transmission in the 380-780 nm wavelength range that is weighted according to the sensitivity of the eye at each wavelength of the range and measured under D65 illumination conditions (daylight). Transmissions are expressed for 2 mm thick optical articles, measured at the center of the optical article and at a normal incidence of the light beam (0° from the normal).

The present substrate having embedded particles in an external part exhibits improved properties of resistance to abrasion and/or scratch. The abrasion resistance properties can be evaluated using the Bayer test, performed in accordance with the ASTM F735-81 standard.

Moreover, the optical article has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating. The critical temperature of an article coated according to the invention is preferably ≥ 70°C, more preferably ≥ 75°C, 80°C, 90°C, 100°C or 110°C.

In some applications, it is preferred that the substrate's main surface be coated with one or more functional coating(s) to improve the optical and/or mechanical properties. The term "coating" is understood to mean any layer, layer stack or film which may be in contact with the substrate and/or with another coating, for example a sol-gel coating or a coating made of an organic resin. A coating may be deposited or formed through various methods, including wet processing, gaseous processing, and film transfer. These functional coatings classically used in optics may be, without limitation, an impact-resistant and/or adhesion primer, an abrasion-resistant and/or scratch-resistant coating, an antireflection coating, a polarized coating, a photochromic coating, or an antistatic coating, or a stack made of two or more such coatings, especially an impact-resistant primer coating coated with an abrasion and/or scratch-resistant coating.

The invention further relates to a plastic eyeglass lens comprising a lens substrate, the lens substrate being obtained from the above disclosed optical material, preferably by molding.

The method for preparing a substrate made of an optical material comprising a polymer matrix, having an external "layer" in which particles are embedded in the polymer matrix will now be described.

The inventors succeeded in incorporating a diffusive function in the substrate of an optical article directly during the manufacturing step of the substrate itself.

A preferred method for obtaining an optical article which includes a substrate made of an optical material according to the invention, i.e., with a layer of embedded particles, comprises covering at least one portion of the inner face of a mold by particles and using the covered mold to form the substrate through a process such as casting polymerization (forming a thermosetting substrate matrix by curing a liquid composition) or injection molding (forming a thermoplastic or thermosetting substrate matrix, generally a thermoplastic one). The present method is compatible with existing molding processes, since particles are applied on the inner surface of a mold before the casting process.

Injection molding comprises injection of a thermosetting or thermoplastic material, for example a polycarbonate-based material, into an injection mold. Molds for optical use are highly polished. The mold having at least one portion of its inner surface covered by particles, in predetermined areas such as a central area of the mold or preferably the whole surface of the mold, is fed, in a manner known per se so as to fill the mold cavity, by a device for compression and injection of the material, which comprises an injection nozzle, a compression screw and a heating device. After heating and/or curing, the mold is opened, and after cooling, an optical article according to the invention can be recovered.

The preferred method is however casting polymerization. It is schematized on figure 1, which shows a non-limiting embodiment of the invention where both inner surfaces of a two-part mold are covered with particles.

Thus, the invention relates to a method for preparing an optical article such as herein described, comprising:
(a) providing a mold having an inner face,
(b) covering at least one portion of said inner face of the mold by particles functionalized with a coupling agent, preferably a silane coupling agent, wherein the refractive index of the particles Rₚ is preferably higher than the refractive index of the polymer matrix Rₛ, preferably the whole surface of the mold,
(c) filling the mold with a polymerizable composition,
(d) curing said polymerizable composition, and
(e) obtaining an optical article having a substrate made of an optical material comprising a polymer matrix, wherein the substrate comprises a bulk part and an external part, said external part of the substrate is made of said optical material comprising said polymer matrix, and particles functionalized with a coupling agent which are embedded into said polymer matrix of the external part of the substrate, said bulk part of the substrate is made of said optical material comprising said polymer matrix, and said particles are not embedded into the bulk part of the substrate, and the haze value of a 2 mm-thick substrate as determined according to the standard ASTM D1003-00 is higher than or equal to 4 %.

Molds are well-known in the art, and the optimal mold for a particular application will be easily identified by the user of ordinary skill in the art. The mold may be of virtually any shape.

In one embodiment, for example when the mold is a glass mold, it is preferred to treat the inner surface of the mold with at least one capping agent such as an organosilane, before step (b). Indeed, glass molds comprise surface silanol groups prone to react by forming covalent bonds with excess/unreacted coupling agent that may be present in the coating composition comprising the particles and therefore at the surface of the resulting substrate, and may prevent disassembling the molded article from the mold. A pre-treatment step of capping the mold enables introduction of end groups (capping groups) that resist further reaction on the inner mold surface, such as terminal alkyl groups. The mold surface is thus covered with the capping agent to favor mold disassembly.

Exemplary capping compounds capable of suppressing reactive groups present at the surface of a mold include n-propyltrimethoxysilane, n-propyltriethoxysilane, methyltriethoxysilane, n-octyltrimethoxysilane, n-octyltriethoxysilane, phenytrimethoxysilane, 3-isocyanatopropyltrimethoxysilane, 3-(methacryloyloxy)propyl trimethoxysilane, 3-aminopropyltrimethoxysilane, 2-[methoxy(polyethyleneoxy)propyl]-trimethoxysilane, 3-mercaptopropyltrimethoxysilane, dimethyldiethoxysilane, γ-glycidoxypropyltrimethoxysilane, 3-isocyanatopropyltriethoxysilane, methoxytri(ethyleneoxy)propyltrimethoxysilane, dodecyl trimethoxysilane, fluoroalkyltrialkoxysilanes, or a mixture thereof.

Hydrophobic capping compounds such as octyltriethoxysilane or dodecyl trimethoxysilane are preferred because they lead to an easier mold disassembly process due to lower surface tension.

The capping composition generally comprises at least one capping agent, at least one solvent such as water, an alcohol, a ketone, an ester or combinations thereof, preferably an alcohol such as methanol, ethanol or isopropanol optionally used with water, and optionally an acidic catalyst, such as hydrochloric acid or acetic acid, as the capping agent may be used under the form of a pre-condensed solution, as described in the context of the description of coupling agents.

The capping composition is generally applied on the mold in liquid phase, and then dried and/or cured at room temperature or by heating. The capping agent should not interfere with the homogeneity of the particle layer that forms in the subsequent step of the process.

In step (b) of the above process, the material responsible of the diffusion is applied on the inner face of a mold. At least a portion of the inner face of the mold is covered by particles functionalized with a coupling agent. The degree of coverage may be dictated by the needs of the user; in some situations, the user may not require more than a small portion of the surface area to be occupied by particles.

The particles cohesion with the polymer substrate is improved by modifing the particles with a coupling agent before application on the mold surface.

As the material deposited on the mold is in particulate form and the particles are dispersed on the mold surface, preferably homogeneously, a porous layer is yielded, in which the substrate material will diffuse, contrary to techniques involving the formation of a continuous layer in a mold. Limiting the amount of binder in the applied particle composition ensures that a continuous layer is not formed. Particles functionalized by a coupling agent are preferably used under a colloidal form.

As used herein, "colloids" are fine particles the mean diameter of which (or the largest size of which in case of elongated particles) is less than 150 nm, more preferably less than 100 nm, dispersed within a dispersing medium (solvent) such as water, an alcohol, a ketone, an ester or combinations thereof, preferably an alcohol such as methanol, ethanol or isopropanol.

Colloidal particle preparation requires well known methods, for example by dispersion of a solid material, or precipitation of material in solvent from soluble precursors using a Stöber-like method.

The most preferred colloidal particles are colloidal particles of at least one metal oxide, metal hydroxide or metal fluoride.

In one embodiment, step (b) is performed by applying onto the at least one portion of the inner face of the mold a liquid composition comprising the particles functionalized with a coupling agent in a liquid carrier (solvent), and drying/evaporating the solvent. In this embodiment, the material deposited on the mold is a heterogeneous mixture containing solid particles and a liquid phase.

The particles are preferably applied by means of a liquid composition containing 1 to 10 % by weight of particles, more preferably 3 to 10 % or 3 to 8 % by weight, relative to the total weight of the composition, depending on the level of haziness required. Indeed, the level of haze of the article substrate increases as the concentrations of diffusive nanoparticles in the composition increases. Thus, the concentration of particles in the carrier used for deposition can be adapted to increase or decrease the thickness of the external part of the substrate in which the particles are embedded and as a result the haze level. The weight content mentioned above is the weight of particles without coupling agent.

The composition for applying the particles on the mold contains at least one coupling agent (or a hydrolysate thereof), which is used to functionalize the (colloidal) particles before deposition on the mold surface, and generally at least one solvent, which is preferably an alcohol, such as an alkanol (methanol, ethanol, propanol...) or a glycol monoether (e.g., Dowanol PM^{®} from Dow Chemical), a ketone (such as methyl ethyl ketone), propylene carbonate or water. The solvent is preferably an organic solvent such as methanol. The particles are suitably dispersed or suspended in the composition by mixing, sonicating, shaking, vibrating, flowing, stirring, agitating, and the like.

The total amount of solvent depends on the nature of the mold to be covered, and on the deposition process. The purpose of the solvent is to achieve good surface wetting and a specific composition viscosity range determined by the deposition equipment used to achieve a specific layer thickness range. The solvent or mixture of solvents typically represents from 25 to 95 % of the weight of the composition, preferably from 50 to 90 %.

A silane coupling agent may be used under the form of a silane pre-condensed solution, namely a silane hydrolysate. The term "hydrolysate" of a silane derivative expresses the fact that it is also possible in the context of the present invention that the silane derivative has already been at least partly hydrolyzed to form silanol groups, and a certain degree of crosslinking may also have already taken place through condensation reaction of these silanol groups, before it is mixed to the other components of the particle composition. The hydrolysis may be performed as known in the art of sol-gel processing, such as disclosed in FR 2702486 and US 4211823. Acidic catalysts such as hydrochloric acid or acetic acid may be used to promote the hydrolysis reaction, in the presence of water. In some embodiments, basic catalysts such as NaOH can be used instead of acidic catalysts.

The amount of coupling agent to be used in the composition used to apply the particles can be easily determined by those skilled in the art with a minimum routine experimentation. Typically, the amount of coupling agent introduced into the composition accounts for 0.1 to 10 % by weight of the total weight of the composition, preferably from 0.2 to 5 % by weight, more preferably from 0.3 to 3 % by weight, ideally from 0.3 to 1 % by weight. In one embodiment, the amount of coupling agent introduced into the composition represents 3 % or less, 2 % or less, or 1 % or less of the total weight of the composition.

Functionalization of particles with the coupling agent is generally performed at room temperature, when preparing the particle composition, by mixing in the solvent the particles, the coupling agent and optional acidic catalyst.

The composition for applying the particles on the mold may contain a very low amount of film-forming binder, and preferably no film-forming binder. In one embodiment, the amount of film-forming binder present in said composition accounts for less than 1 % by weight of the total weight of the composition. A film-forming binder refers to a compound that is not primarily used to functionalize the nanoparticles.

The composition that is generally used to cover a mold surface may further contain small amounts, preferably from 0.005 to 1 % by weight, based on the total weight of the composition, of at least one non ionic or ionic surface active compound (surfactant), to improve wetting of the mold surface. Said surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec^{®} FC-4434 from 3M (non ionic surfactant comprising fluoroaliphatic polymeric esters), Unidyne^{™} NS-9013, and EFKA^{®} 3034 from CIBA (fluorocarbon-modified polysiloxane). Useful fluorinated surfactants are disclosed in WO 2010/076314. Various other additives can be included in said coating composition.

The composition containing the dispersed particles is generally applied on the mold in liquid phase by classical methods such as spin coating, dip coating or flow coating, or spray coating, and then dried and/or cured at room temperature or by heating to remove the solvent(s) and form a layer of particles.

Spraying is the preferred application method as it provides a better uniformity of the diffusive layer on the final optical article. Several approaches are possible, such as spraying the composition on a pre-heated mold to directly evaporate the solvent(s), which provides a very good uniformity of the deposited layer of particles, or spraying the composition on a room temperature mold and subsequently evaporating the solvent(s). In the latter method, static drying, e.g., in an oven, is preferred as it improves the diffusive layer uniformity.

When a two-part mold is employed, both inner surfaces of the molds can be covered with particles, or only one of them.

In step (c), the particle-bearing mold is filled with a polymerizable composition. The polymerizable composition comprises polymerizable compounds such as monomers, oligomers and/or prepolymers. The preferred polymerizable compounds are allyl glycol carbonates, polythiols, episulfides, polyisocyanates, polyisothiocyanates and (meth)acrylates. The preferred combinations of polymerizable compounds are a combination of diethylene glycol bis(allylcarbonate) and eventually oligomers of diethylene glycol bis(allylcarbonate), a combination of a polyisocyanate compound and a polyol compound, a combination of a polyisocyanate compound and a polythiol compound, and a combination of a polyepisulfide compound and a polythiol compound. Examples of useful polymerizable compounds are disclosed e.g., in WO 2014/133111.

In one embodiment of the invention, the polymerizable composition is prepared by first mixing the optional absorbers such as a UV absorber with at least one first monomer to obtain a homogeneous first composition, and then at least one second monomer is optionally added in said composition to obtain a second composition. Additives such as catalysts/initiators, color balancing agents and mold release agents can be added to the first and/or second composition.

The optical material composition that has been previously described is poured into the cavity of a casting mold, which may comprise mold parts held together using a gasket or tape. Depending on the desired characteristics of the resulting optical material, degassing can be performed under reduced pressure and/or filtration can be performed under increased pressure or reduced pressure before pouring the optical material composition in the mold.

After pouring the polymerizable composition in an assembly of molds bearing a diffusive layer, the composition is cured. The casting mold can be heated in an oven or immersed in a water bath equipped with a cooling and/or heating device, according to a predetermined temperature program to cure the composition in the mold. After polymerization of the polymerizable composition and disassembly of the mold assembly, the resulting molded product having an internal diffusion layer may be annealed if necessary.

The conditions of the molding process are selected to embed the particles into the surface of the substrate, in particular the temperature, pressure, material of the polymer matrix, particle composition, particle structure, particle size. One of ordinary skill in the art easily avoids the particles to fuse and form a single layer on top of the product. The embedded particles are localized near the surface of the optical article, and remain discrete or form discrete embedded multi-particle-aggregates.

As previously explained, various additives can be incorporated into the mass of the substrate by methods well known in the art, preferably during the manufacture of the substrate itself.

Advantages of the present process include its simplicity and its low cost compared to other methods involving laser engraving of a hard coated optical article surface to produce a diffusive pattern. The surface of the present optical article does not show recesses after introduction of particulate optical elements and cannot become permanently clogged by contaminants, contrary to myopia control patterns introduced by laser marking process.

The particles are applied to the substrate directly in the mold, resulting in an optical article the surface of which is finished and suitable for use "as is" in an end use application, if desired, or which requires less subsequent surface preparation or coating treatment. The particles can be easily incorporated into the substrate's sub-surface in a very short processing time. As a matter of fact, the process is very straightforward, suitable for mass production and allows the preparation of economical optical articles such as lenses, for example uncoated lenses (e.g., solar lenses), with less steps than heretofore to achieve a finished surface.

The invention is applicable to all substrates by using particles having a sufficient refractive index difference as compared to the refractive index of the substrate matrix. Apart from diffusion increase, additional properties can be obtained from this invention. For example, the particles embedded at the surface of the optical substrate can also be used as anchor for functional coating such as an antifouling or antistatic coating.

Another object of the invention is the use of an optical article as described previously, containing an external diffusive "layer", to prevent an eye-length growth related disorder, preferably the advancement of myopia in a subject in need thereof, preferably a person and especially a child or young adult.

The present optical article, which is preferably an ophthalmic lens, can be used to reduce a contrast of images for example in a periphery of a wearer's vision, thus allowing monitoring eye-length related disorders, typically arresting eye-lengthening.

Still another object of the invention is a method of monitoring and arresting an eye-length related disorder, preferably myopia progression, in a person, comprising providing the person with an optical article as described previously.

The invention also relates to an optical article as described previously for use in the treatment of an eye-length growth related disorder, typically for myopia control and prevention.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 25°C at a wavelength of 550 nm.

### Examples

### 1. Chemicals used

Optical substrates with embedded particles were prepared from a colloidal particle formulation described hereunder and two different substrate polymerizable compositions.

The first alternative polymerizable composition was a composition comprising three polymerizable monomers in order to produce the MR8^{®} polythiourethane matrix (refractive index: 1.6), namely norbornene diisocyanate (MR8A, CAS No. 74091-64-8), pentaerythritol tetrakis (3-mercaptopropionate) (MR8B1, CAS No. 7575-23-7), and 2,3-bis((2-mercaptoethyl)thio)-1-propanethiol (MR8B2, CAS No. 131538-00-6). The polymerizable composition also contained dimethyltin dichloride as a catalyst (CAS No. 753-73-1), Seesorb^{®} 709 (2-(2-hydroxy-5-tert-octylphenyl)benzotriazole, CAS No. 3147-75-9) as a UV absorber, Seesorb^{®} 703 (2-(2-hydroxy-3-tert-butyl-5-methylphenyl)-5-chlorobenzotriazole, CAS No. 3896-11-5) as a UV absorber, Diaresin blue J^{®} as a bluing agent (CAS No. 86090-40-6) and Zelec UN^{®} as a mold release agent.

The second alternative polymerizable composition was a composition containing two polymerizable monomers in order to produce the ORMA^{®} matrix (refractive index: 1.5) with embedded particles, namely CR-39^{®} (diethylene glycol bis(allyl carbonate), allyl monomer 1, CAS No. 142-22-3, commercially available from PPG Industries, Inc.) and CR-39E^{®} (tetraallyl urethane monomer 2, commercially available from Sartomer Company, Inc. and having the designation NTX-443). The polymerizable composition also contained diisopropyl peroxydicarbonate (CAS No. 105-64-6) as an initiator and UV-9^{®} (2-hydroxy-4-methoxybenzophenone, CAS No. 131-57-7) as a UV absorber.

The liquid formulations used to embed particles in the substrate contained methanol as a solvent, particles used under the form of a commercial colloid, a coupling agent, and hydrochloric acid (CAS No. 7647-01-0) as the hydrolyzing agent. The nanoparticle formulations were prepared by diluting the colloidal particles in methanol and adding the coupling agent and hydrochloric acid, and stirring with a magnetic stirrer for 24 hours at room temperature.

The following coupling agents were used in the examples: vinyltrimethoxysilane (CAS No. 2768-02-7), 3-mercaptopropyl trimethoxysilane, [3-(2,3-epoxypropoxy)propyl] trimethoxysilane (3-glycidyloxypropyl trimethoxysilane), 3-methacryloxypropyltrimethoxysilane (3-(trimethoxysilyl)propyl methacrylate) and 3-acryloxypropyltrimethoxysilane.

The following dispersions of colloidal particles were used in the different examples and comparative examples:

| Commercial colloid | Solid content, solvent | Refractive index of particles | Average particle size (nm) |
|---|---|---|---|
| TiO₂ 15 % wt in ethanol | TiO₂ 15 % wt in ethanol | 2.65 | 79 |
| HX-305-W1 (Nissan Chemical industries, Ltd.) | SnO₂ 23.5 % wt | 2.0 | 27 |
| | ZrO₂ 3.5% wt | | |
| | Sb₂O₅ 2.7% wt | | |
| | Total solid part: 29.7 % wt in water | | |
| MA-ST-HV (Nissan Chemical industries, Ltd.) | SiO₂ 30% wt in methanol | 1.48 | 62 |
| ST-AK-ML (Nissan Chemical industries, Ltd.) | SiO₂ 25-35% wt, Al₂O₃ <3 % wt in water | 1.48 | 94 |
| HAS (Ludox) | SiO₂ 30 % wt in water | 1.48 | 21 |

A dispersion of ZrO₂ particles (20 % wt in water, ZSL-20N provided by New Techs Co., Ltd) having a refractive index of 2.21 and an average particle size of 78 nm can also be used to prepare optical articles according to the invention (data not shown).

The surface of the molds was capped with a composition comprising ethanol (92.64 mL), deionized water (4.88 mL), dodecyl trimethoxysilane (0.05 mL) as the hydrophobic capping agent and acetic acid (CAS No. 64-19-7, 2.44 mL). Said capping agent solution was stirred with a magnetic stirrer for 30 minutes at room temperature before use.

### 2. Manufacture of diffusive optical articles by casting

Cleaned convex and concave plano glass molds of high refractive index having 65-80 mm diameter were first coated with the capping agent solution mentioned in § 1 by immersing the molds into the capping solution for 1 minute. The molds were briefly rinsed in ethanol to remove any excess unreacted silane, dried at room temperature, then cured for 30 minutes at 110°C in an oven and cooled down to room temperature. Next, the capped molds were cleaned with a dry cloth to remove any dust and stain before further process.

In order to apply the diffusive material to the molds, different methods were used. In examples 1, 4 and comparative examples 1-3, the capped molds were dipped for one minute in the nanoparticle formulations, removed and then dried at room temperature for more than 30 minutes to ensure that the solvent was entirely gone (both faces of the molds were covered, implying that layers of embedded particles will be present on both main surfaces of the lens). In examples 5-9 and 15-18, the capped molds were preheated in oven at 100°C for 30 minutes. Then, the nanoparticle formulations were applied on the concave surfaces of the preheated capped molds by manual spraying (implying that the layer of embedded particles will be present on the convex surface of the lens). The solvent was completely removed when the compositions reached the hot surface of the molds. In examples 10-14, the nanoparticle formulations were applied on the concave surfaces of the capped molds by manual spraying, as in examples 5-9 and 15-18. Then, the molds were dried with a hair dryer (static drying in an oven can also be performed to improve the diffusive layer uniformity).

The molds containing a layer of diffusive material were then assembled with a tape or a gasket and a clip. A center thickness adjustment was made to obtain 2 mm thick samples.

The assembled molds were filled with a monomer formulation prepared as disclosed in WO 2019/030263 (either Orma^{®} or MR8^{®}), using a cleaned syringe, and the polymerization reaction was carried out in a regulated electronic oven to create lenses following the polymerization cycles disclosed in WO 2019/030263. The molds were then disassembled to obtain lenses comprising a body of a thermoset material with diffusive particles embedded in an outer layer.

### 3. Testing methods

The following test procedures were used to evaluate the optical articles prepared according to the present invention.

The haze value of the final optical article was measured by light transmission utilizing the Haze-Guard Plus haze meter from BYK-Gardner (a color difference meter) according to the method of ASTM D1003-00. The instrument was first calibrated according to the manufacturer's instructions. Next, the sample was placed on the transmission light beam of the pre-calibrated haze meter and the haze value was recorded in the center and averaged from at least three samples. As haze is a measurement of the percentage of transmitted light scattered more than 2.5° from the axis of the incident light, the higher the haze value, the higher the degree of cloudiness. Haze values are measured for samples having a 2 mm thickness, preferably at a wavelength of 550 nm.

The relative light transmission factor in the visible spectrum Tv (or "luminous transmittance"), defined in the standard ISO 13666:1998 was determined according to the standard ISO 8980-3 (from 380 to 780 nm) from the light transmission spectrum, which was recorded in transmission from a wearer's view angle using the same device, with the back (concave) side of the lens (2 mm thickness at the center) facing the detector and light incoming on the front side of the lens, under D65 illumination conditions (daylight).

The critical temperature of the article was measured in the manner indicated in patent application WO 2008/001011. It was measured one week after production of the article.

### 4. Optical articles prepared and characterizations

Table 1 compares the performances of various nanoparticle formulations used in examples 1, 4 and comparative examples 1-3 at similar weight content of nanoparticles. The coupling agent used was vinyltrimethoxysilane and the optical material of the substrate was Orma^{®}

**Table 1**

| Substrate: Orma^{®} | Chemical content (wt %) | | | | |
|---|---|---|---|---|---|
| | Examples | | | | |
| | Comp. 1 | 1 | 4 | Comp. 2 | Comp. 3 |
| Methanol | 86.33 | 76.68 | 86.22 | 86.33 | 86.33 |
| Vinyltrimethoxysilane | 0.54 | 0.48 | 0.54 | 0.54 | 0.54 |
| HCl | 0.54 | 0.48 | 0.54 | 0.54 | 0.54 |
| MA-ST-HV (SiO₂ 30% wt) | 12.59 | | | | |
| TiO₂ (TiO₂ 15% wt) | | 22.36 | | | |
| HX-305-W1 (SnO₂ 29.7% wt) | | | 12.70 | | |
| ST-AK-ML (SiO₂+Al₂O₃ 28% wt) | | | | 12.59 | |
| HAS (SiO₂ 30% wt) | | | | | 12.59 |
| Total weight | 100.00 | 100.00 | 100.00 | 100.00 | 100.00 |
| Haze (%) | 0.19 | 8.73 | 6.36 | 0.42 | 0.39 |

Examples 1, 4 use particles according to the invention, having a refractive index sufficiently higher than the polymer matrix of the substrate (Orma^{®}, n = 1.5), which provides lenses with controlled hazy surface. The diffusive particles scatter light to reduce contrast of an object viewed through the reduced contrast areas. On the opposite, the lenses of the comparative examples, using particles having an insufficient refractive index difference as compared to the refractive index of the polymer matrix, did not reach a sufficient haze value.

Table 2 shows the particle formulations used to compare the performances of various coupling agents on Orma^{®} and MR8^{®} substrate materials. The particles used were SnO₂ nanoparticles used in an amount of 6.69 % by weight as compared to the composition total weight.

**Table 2**

| Substrate: Orma^{®} or MR8^{®} | Chemical content (wt %) | | | | | |
|---|---|---|---|---|---|---|
| | Examples | | | | | |
| | 5 | 6 | 7 | 8 | 9 | Comp. 4 |
| Methanol | 76.50 | 76.50 | 76.50 | 76.50 | 76.50 | |
| HCl | 0.48 | 0.48 | 0.48 | 0.48 | 0.48 | |
| Vinyltrimethoxysilane | 0.48 | | | | | |
| 3-mercaptopropyltrimethoxysilane | | 0.48 | | | | |
| 3-glycidyloxypropyltrimethoxysilane | | | 0.48 | | | |
| 3-methacryloxypropyltri methoxysilane | | | | 0.48 | | |
| 3-acryloxypropyltrimethoxysilane | | | | | 0.48 | |
| Colloid HX-305-W1 (SnO₂ 29.7 % wt) | 22.54 | 22.54 | 22.54 | 22.54 | 22.54 | |
| Total weight | 100.0 | 100.0 | 100.0 | 100.0 | 100.0 | |
| Haze (%) on Orma^{®} substrate | 19.8 % | 44.6 % | 21.2 % | 13.6 % | 12.8 % | 0.16 % |
| Haze (%) on MR8^{®} substrate | 16.7% | 26.6% | 24.7% | 11.9% | 16.3% | 0.17 % |
| Tv (%) on Orma^{®} substrate | 88.9% | 87.4% | 88.4% | 89.1% | 89.3% | 91.9 % |
| Tv (%) on MR8^{®} substrate | 87.9% | 87.9% | 87.8% | 87.9% | 87.7% | 89.6 % |

All the coupling agents tested provided lenses with a hazy surface, while lenses without embedded particles (comparative example 4) had a haze of 0 % (Orma^{®} and MR8^{®} substrate materials). The diffusive layer of particles had a limited impact on the transmission of the material in the visible range (Tv), which was generally only decreased by 2-3 %, depending on the coupling agent used.

Adhesion to the substrate of the external "layer" comprising embedded particles was also checked by performing a Sand Bayer test (as disclosed in WO 2019/030264) and comparing the haze before and after the test.

The results indicate that for the Orma^{®} substrate material, all coupling agents except 3-glycidyloxypropyltrimethoxysilane gave comparable adhesion results, whereas 3-glycidyloxypropyltrimethoxysilane provided a limited adhesion (higher difference of haze after and before the sand Bayer testing). In addition, a superior uniformity of the diffusive particle layer was provided by 3-acryloxypropyltrimethoxysilane and 3-methacryloxypropyltrimethoxysilane.

In the case of the MR8^{®} substrate material, 3-mercaptopropyltrimethoxysilane provided the best adhesion, but the homogeneity of the diffusive particle layer was lower than 3-acryloxypropyltrimethoxysilane and 3-methacryloxypropyltrimethoxysilane.

It was also observed that lenses of examples 5-9 with a diffusive particle layer on their surface had higher abrasion resistance than the corresponding substrates with no embedded particles, indicating a hardening the substrate surface even in the absence of a hard coat layer.

Table 3 shows the effect of the weight concentration of particles in the liquid composition applied to the mold on the haze level of the resulting optical article. The particles used were SnO₂ nanoparticles used in an increasing amount from example 10 to 14, with 3-methacryloxypropyl trimethoxysilane as the coupling agent.

**Table 3**

| Orma^{®} | Chemical content (wt %) | | | | |
|---|---|---|---|---|---|
| | Examples | | | | |
| | 10 | 11 | 12 | 13 | 14 |
| Methanol | 84.68 | 79.05 | 76.50 | 74.12 | 69.77 |
| HCl | 0.53 | 0.49 | 0.48 | 0.46 | 0.44 |
| 3-methacryloxypropyltrimethoxysilane | 0.53 | 0.49 | 0.48 | 0.46 | 0.44 |
| Colloid HX-305-W1 (SnO₂ 29.7 % wt) | 14.26 | 19.96 | 22.54 | 24.96 | 29.36 |
| Total weight | 100.0 | 100.0 | 100.0 | 100.0 | 100.0 |
| SnO₂ wt % | 4.23 | 5.93 | 6.69 | 7.41 | 8.72 |
| Haze (%) | 19 | 25 | 30 | 33 | 40 |

Examples 10-14 show that the haziness of the final optical article increases as the concentrations of diffusive nanoparticles increases. It was also observed that a lower level of haze was obtained when the molds were dried in an oven rather than with a hair dryer after spraying the nanoparticle formulations on the molds.

In example 15 , the lens of example 10 was further coated with the impact resistant primer coating disclosed in the experimental part of WO 2010/109154 modified to have a refractive index of 1.6 by addition of high refractive index colloids, the abrasion- and scratch-resistant coating (hard coat) disclosed in example 3 of EP 0614957 (modified to have a refractive index of 1.6 rather than 1.5 by adding high refractive index colloids), and a 6-layer antireflection coating of the type as described in example 1 of WO 2012/076714. The lens of example 16 was prepared similarly, using an MR8^{®} monomer formulation rather than Orma^{®}.

Table 4 shows that depositing further coatings on the substrates having an external part in which particles functionalized with a coupling agent are embedded according to the invention does not significantly alter their haze level. Their transmittance is increased due to the presence of the antireflection coating (lens power: 0).

**Table 4**

| Example | Substrate | Coating detail | Transmittance Tv (%) | | Haze (%) | |
|---|---|---|---|---|---|---|
| | | | Without coating | After coating | Without coating | After coating |
| 15 | Orma^{®} | Primer + hard coat + antireflection coating | 77.7 | 84.5 | 15.2 | 15.4 |
| 16 | MR8^{®} | Primer + hard coat + antireflection coating | 75.8 | 78.6 | 17.2 | 19.1 |

The lenses also passed a crosshatch testing, which is a method (ASTM D3359-93) used to evaluate the adhesion of the abrasion- and scratch-resistant coating (hard coat) to the substrate. This demonstrates that the presence of the layer of embedded particles on the surface of the substrate according to the invention does not affect adhesion of the hard coat.

The lenses of examples 17 and 18 had respectively the same coatings as the lenses of examples 15 and 16 (lens power: -2.00 diopters).

Table 5 shows that the critical temperature of the optical article, which is defined as the temperature from which cracks begin to appear in a coating present at the surface of the substrate (generally the antireflection coating), is not negatively affected by the external "layer" of embedded particles. It is even improved in the case of the MR8^{®} substrate material.

**Table 5**

| Example | Substrate | Coating detail | Haze (%) * | Critical temperature (°C) |
|---|---|---|---|---|
| 17 | Orma^{®} | Primer + hard coat + antireflection coating | 11.3 | 70 |
| Comp. 5 | Orma^{®} (no embedded particles) | Primer + hard coat + antireflection coating | 0.16 | 70 |
| 18 | MR8^{®} | Primer + hard coat + antireflection coating | 18.4 | 90 |
| Comp. 6 | MR8^{®} (no embedded particles) | Primer + hard coat + antireflection coating | 0.17 | 80 |

| | | | | |
|---|---|---|---|---|
| * Measured before critical temperature testing. | | | | |

The lenses of comparative examples 5 and 6 are respectively identical to the lenses of examples 17 and 18 but do not have an external part with particles embedded therein, and therefore hardly any haze (≤ 0.2 %).

## Claims

1. Optical article having a substrate made of an optical material comprising a polymer matrix, the substrate comprising a bulk part, and an external part in which particles functionalized with a coupling agent are embedded, and
said external part of the substrate is made of said optical material comprising said polymer matrix, and particles functionalized with a coupling agent embedded into said polymer matrix of the external part of the substrate,
said bulk part of the substrate is made of said optical material comprising said polymer matrix, and said particles are not embedded into the bulk part of the substrate,
wherein the haze value of a 2 mm-thick substrate as determined according to the standard ASTM D1003-00 is higher than or equal to 4 %, preferably higher than or equal to 8 %.

2. Optical article according to claim 1, wherein |Rₚ - Rₛ| > 0.1, preferably |Rₚ - Rₛ| > 0.5.

3. Optical article according to any one of the preceding claims, wherein the refractive index of the particles Rₚ is higher than the refractive index of the polymer matrix Rₛ,

4. Optical article according to any one of the preceding claims, wherein the polymer matrix has a refractive index Rₛ higher than or equal to 1.5, preferably higher than or equal to 1.6.

5. Optical article according to any one of the preceding claims, wherein the particles have a refractive index Rₚ higher than or equal to 1.8, preferably higher than or equal to 1.95.

6. Optical article according to any one of the preceding claims, wherein the particles are selected from metal oxide and metal hydroxide particles.

7. Optical article according to any one of the preceding claims, wherein the particles are selected from TiO₂, SnO₂, ZrO₂, and Sb₂O₅ particles.

8. Optical article according to any one of the preceding claims, wherein the particles have a diameter of less than 100 nm.

9. Optical article according to any one of the preceding claims, wherein the coupling agent is selected from epoxysilanes, aminosilanes, mercaptosilanes and unsaturated silanes.

10. Optical article according to any one of the preceding claims, wherein the coupling agent is selected from vinylsilanes, (meth)acrylic silanes, allylsilanes, mercaptoalkylsilanes, aminoalkylsilanes, and glycidoxyalkylsilanes.

11. Optical article according to any one of the preceding claims, wherein the weight ratio of particles/coupling agent ranges from 5 to 25.

12. Optical article according to any one of the preceding claims, wherein the thickness of the external part of the substrate in which the particles are embedded represents less than 0.05 % of the thickness of the substrate.

13. Optical article according to any one of the preceding claims, further defined as an ophthalmic lens.

14. Process for making an optical article according to any one of the preceding claims, comprising :
(a) providing a mold having an inner face,
(b) covering at least one portion of said inner face of the mold by particles functionalized with a coupling agent,
(c) filling the mold with a polymerizable composition,
(d) curing said polymerizable composition, and
(e) obtaining an optical article having a substrate made of an optical material comprising a polymer matrix, wherein the substrate comprises a bulk part and an external part, said external part of the substrate is made of said optical material comprising said polymer matrix, and particles functionalized with a coupling agent which are embedded into said polymer matrix of the external part of the substrate, said bulk part of the substrate is made of said optical material comprising said polymer matrix, and said particles are not embedded into the bulk part of the substrate, and the haze value of a 2 mm-thick substrate as determined according to the standard ASTM D1003-00 is higher than or equal to 4 %.

15. A process according to claim 14, wherein step (b) is performed by applying onto said at least one portion of the inner face of the mold a liquid composition comprising said particles functionalized with a coupling agent in a solvent, and drying the solvent, and the particles represent from 3 % to 10 % by weight relative to the total weight of the liquid composition.
